# EUROPÄISCHE PATENTANMELDUNG

(11) **EP 3 757 262 A1**
(43) Veröffentlichungstag der Anmeldung: **30.12.2020**
(21) Anmeldenummer: 20180854.0
(22) Anmeldetag: 18.06.2020
(51) Int. Cl.: D01G 31/00, B65H 26/00, B65H 63/00, D01H 13/32, G01N 21/89

(54) **VERFAHREN ZUR OPTISCHEN ÜBERWACHUNG EINER TEXTILMASCHINE, SOWIE EINE ÜBERWACHUNGSEINRICHTUNG UND EIN COMPUTERPROGRAMM**

(30) Priorität: 19.06.2019 DE 102019116672
(71) Anmelder: Maschinenfabrik Rieter AG, 8406 Winterthur (CH)
(72) Erfinder: Schaeffler, Gernot, 73116 Waeschenbeuren (DE)

(57) **Zusammenfassung**

Die Erfindung betrifft ein Verfahren zur optischen Überwachung einer Textilmaschine, insbesondere einer Spinnmaschine, Spulmaschine, Flyer, Karde oder Kämmmaschine, mit zumindest einer Arbeitsstelle (1), welche einen Faserverband (9), insbesondere ein Garn, ein Faserband, eine Lunte oder ein Vlies, verarbeitet, wobei ein Ist-Zustand der Arbeitsstelle (1) und des Faserverbands (9) optisch durch eine Bildaufnahme erfasst wird. Die Bildaufnahme erfolgt mit wenigstens einer portablen Vorrichtung (3). Die Bildaufnahme wird in Bezug auf einen Unterschied zwischen einem Soll-Zustand der Arbeitsstelle (1) und des Faserverbands (9) und dem jeweiligen Ist-Zustand überwacht. Des Weiteren betrifft die Erfindung eine Überwachungseinrichtung und ein Computerprogramm, zur Ausführung zumindest von Teilen dieses Verfahrens.

## Beschreibung

Die vorliegende Erfindung betrifft ein Verfahren zur optischen Überwachung einer Textilmaschine, insbesondere einer Spinnmaschine, Spulmaschine, Flyer, Karde oder Kämmmaschine, mit zumindest einer Arbeitsstelle, welche einen Faserverband, insbesondere ein Garn, ein Faserband, eine Lunte oder ein Vlies, verarbeitet, wobei ein Ist-Zustand der Arbeitsstelle und des Faserverbands optisch durch eine Bildaufnahme erfasst wird. Des Weiteren betrifft die Erfindung eine Überwachungseinrichtung und ein Computerprogramm, zur Ausführung zumindest von Teilen dieses Verfahrens.

Verfahren zur optischen Überwachung und/oder Überprüfung einer Textilmaschine, insbesondere deren Erzeugnisse, sind im Stand der Technik hinlänglich bekannt. Ziel ist es hierbei, eine gewünschte Garnqualität sicherzustellen. So werden beispielsweise zur Bestimmung der Dicke, der Gleichmäßigkeit und der Haarigkeit eines Garns bevorzugt optische Messverfahren eingesetzt.

So schlägt die WO 99/54532 A1 ein Verfahren zum Ermitteln der optischen Eigenschaften eines Garnstücks vor. Nach diesem Verfahren wird ein Bild des Garnstückes erstellt und anschließend analysiert. Hierdurch können Dickstellen, Dünnstellen sowie der CV-Wert erfasst werden und gleichzeitig auch die Haarigkeit des Garns bestimmt werden. Nachteilig ist an diesem Verfahren, dass, wie seit vielen Jahren üblich, an jeder Arbeitsstelle einer Textilmaschine eine individuelle Garnüberwachungsvorrichtung anzubringen ist. Durch eine Vielzahl an Arbeitsstellen einer Textilmaschine und somit an Garnüberwachungsvorrichtungen entstehen erhöhte Anschaffungs- und Wartungskosten.

Während die genannte Erfindung bereits zu einem qualitativ hochwertigen Garn durch optische Ermittlung der Eigenschaften eines Garnstücks beitragen, besteht weiterhin das Verlangen nach einfacheren, kostengünstigeren Verfahren der Qualitätsüberwachung eines Garnstücks sowie von Arbeitsstellen.

Aufgabe der vorliegenden Erfindung ist es somit, ein Verfahren, eine Überwachungseinrichtung und ein Computerprogramm zur optischen Überwachung und/oder Überprüfung einer Textilmaschine zu schaffen, welche bekannte Verfahren verbessert.

Die Aufgabe wird gelöst durch ein Verfahren, eine Überwachungseinrichtung und ein Computerprogramm mit den Merkmalen der unabhängigen Patentansprüche.

Vorgeschlagen wird ein Verfahren zur optischen Überwachung einer Textilmaschine, insbesondere einer Spinnmaschine, Spulmaschine, Flyer, Karde oder Kämmmaschine, mit zumindest einer Arbeitsstelle, welche einen Faserverband, insbesondere ein Garn, ein Faserband, eine Lunte oder ein Vlies, verarbeitet, wobei ein Ist-Zustand der Arbeitsstelle und des Faserverbands optisch durch eine Bildaufnahme erfasst wird. Die Spinnmaschine kann hierbei beispielsweise eine Rotorspinnmaschine, eine Luftspinnmaschine oder eine Ringspinnmaschine sein.

Als "optische Überwachung" ist hierbei die Überwachung der Textilmaschine mittels Bildaufnahmen zu verstehen, welche mittels der Ausbreitung von Licht und/oder dessen Wechselwirkungen mit Oberflächen arbeitet. Hierbei kann es sich sowohl um Licht im für das menschliche Auge sichtbaren, als auch im unsichtbaren Wellenbereich handeln. Beim unsichtbaren Wellenbereich kann es sich insbesondere um Infrarot- und/oder Ultraviolettstrahlung handeln.

Als Bildaufnahme kann hierbei sowohl eine Einzelbildaufnahme in Form eines Fotos als auch eine Serienbildaufnahme in Form eines Videos verwendet werden. Die Bildaufnahme erfolgt mit wenigstens einer portablen Vorrichtung. Als "portable Vorrichtung" ist hierbei eine Vorrichtung zu verstehen, welche transportierbar und/oder tragbar ist und somit sowohl den Ist-Zustand der Arbeitsstelle, als auch den Ist-Zustand des Faserverbands bestimmen kann. Für die Bildaufnahme kann die portable Vorrichtung eine Bildaufnahmeeinrichtung aufweisen. Die Bildaufnahme wird hierbei in Bezug auf einen Unterschied zwischen einem Soll-Zustand der Arbeitsstelle und des Faserverbands und dem jeweiligen Ist-Zustand überwacht. Der Soll-Zustand ist hierbei dadurch definiert, dass die zumindest eine Arbeitsstelle der Textilmaschine optimal arbeitet und/oder ein optimaler Faserverband in hoher Qualität hergestellt wird. Durch einen Vergleich zwischen dem Soll-Zustand und dem jeweiligen Ist-Zustand kann festgestellt werden, wann und/oder wie die Arbeitsstelle und/oder der Faserverband vom Soll-Zustand abweicht. Im Gegensatz zum gegenwärtigen Stand der Technik kann somit sowohl der Ist-Zustand der Arbeitsstelle, als auch der Ist-Zustand des Faserverbands mit einer Vorrichtung bestimmt werden. Zusätzlich ist eine Verwendung einer handelsüblichen portablen Vorrichtung möglich. Dies spart Entwicklungskosten und/oder Instandhaltungskosten der maschinenspezifischen Vorrichtungen zur optischen Überwachung. Auch ist der Aufwand einer Nachrüstung einer portablen Vorrichtung zur Überwachung um ein Vielfaches reduziert, da potenzielle Umbauarbeiten an der Textilmaschine entfallen.

Vorteilhaft ist es, wenn die portable Vorrichtung ein Smartphone, ein Tablet, ein tragbarer Computer, eine Datenbrille, eine portable Kamera oder ein verfahrbares System ist. Die portable Vorrichtung kann somit zu unterschiedlichen Arbeitsstellen transportiert und/oder getragen werden. Dies hat den Vorteil, dass bei einer Textilmaschine mit einer Mehrzahl an Arbeitsstellen, welche jeweils einen Faserverband herstellen, mit einer portablen Vorrichtung die Ist-Zustände dieser Mehrzahl an Arbeitsstellen und deren Faserverbände erfasst werden können. Als "verfahrbares System" ist hierbei ein System zu verstehen, welches die Bildaufnahmeeinrichtung aufweist und sich entlang dieser Arbeitsstellen verfahren lässt. Dieses verfahrbare System kann entweder automatisiert oder durch einen Bediener geführt werden. Ebenso ist es vorstellbar, dass es sich bei der portablen Vorrichtung um ein bereits vorhandenes verfahrbares System, wie beispielsweise einem Serviceaggregat und/oder einem an der Textilmaschine verfahrenden Bläser handelt. Dadurch kann zeitgleich zur eigentlichen Aufgabe des Serviceaggregats und/oder des Bläsers beim Warten und/oder Abblasen der Arbeitsstelle die Bildaufnahme erfasst werden.

Vorteilhaft ist es zudem, wenn die portable Vorrichtung nacheinander und/oder gleichzeitig mehrere Textilmaschinen und/oder mehrere Arbeitsstellen und Faserverbände erfasst. So kann sichergestellt werden, dass mehrere Textilmaschinen und/oder mehrere Arbeitsstellen und Faserverbände überwacht werden können, ohne jeweils eine eigene Vorrichtung zur optischen Überwachung bereitzustellen. Die gleichzeitige Überwachung kann insbesondere bei einem Maschinenneuanlauf von einer Vielzahl an Arbeitsstellen von Vorteil sein, da alle Arbeitsstellen gleichzeitig überwacht werden können. Dies spart neben den Entwicklungskosten zusätzlich vielfach anfallende Anschaffungskosten für Vorrichtungen zur optischen Überwachung, je nach Anzahl der Arbeitsstellen und/oder Textilmaschinen.

Vorteile bringt es zudem mit sich, wenn die portable Vorrichtung entlang der mehreren Textilmaschinen und/oder der mehreren Arbeitsstellen und Faserverbände transportierbar und/oder verfahrbar gestaltet ist. Dadurch können die Ist-Zustände mehrerer Textilmaschinen und/oder mehrerer Arbeitsstellen einer Textilmaschine sowie deren Faserverbände nacheinander erfasst und in Bezug auf den Unterschied zum Soll-Zustand überwacht werden.

Des Weiteren ist es vorteilhaft, wenn der Ist-Zustand anhand der Bildaufnahme von der portablen Vorrichtung ausgewertet wird und/oder dass die Bildaufnahme von der portablen Vorrichtung an einen zentralen Rechner gesendet und dort der Ist-Zustand ausgewertet wird. Eine Auswertung der Bildaufnahme kann im Auswertungsaufwand variieren. Die portable Vorrichtung hat zumeist eine geringere Leistungsfähigkeit als der zentrale Rechner. So ist es denkbar, dass eine Bildaufnahme, die nach erster Abschätzung einen geringeren Leistungsbedarf benötigt, von der portablen Vorrichtung ausgewertet wird, wohingegen eine Bildaufnahme mit einem größeren benötigten Leistungsaufwand an den zentralen Rechner gesendet und dort ausgewertet wird. Ebenso ist es vorstellbar, dass eine Bildaufnahme sowohl von der portablen Vorrichtung, als auch vom zentralen Rechner ausgewertet wird. So kann die Bildaufnahme beispielsweise auf unterschiedliche Aspekte hin ausgewertet werden und/oder eine Kontrolle der Auswertung erfolgen.

Vorteilhaft ist es zudem, wenn die Bildaufnahme und/oder der Ist-Zustand in einer Datenbank abgelegt wird. So kann stets auf die Datenbank mit einer Vielzahl an Ist-Zuständen zugegriffen werden und in die Bewertung und/oder Überwachung eines folgenden Ist-Zustandes mit einbezogen werden. Ebenso ist dadurch eine Sicherung der Ist-Zustände gegeben, womit der produzierte Faserverband auch zu einem späteren Zeitpunkt analysiert werden kann. Diese Datenbank kann sowohl auf der portablen Vorrichtung, als auch auf dem zentralen Rechner vorhanden sein.

Vorteile bringt es zudem mit sich, wenn anhand des Vergleichs zwischen Ist-Zustand und Soll-Zustand eine Erkennung von Fehlern der Arbeitsstelle und/oder des Faserverbands erfolgt. Als Faserverband ist hierbei der Faserverband in jeder Entwicklungsphase der Produktion der jeweiligen Textilmaschine zu verstehen. So kann stets eine hohe Qualität des produzierten Faserverbands gewährleistet werden. Mögliche Fehler am Faserverband können hierbei aus Textilmaschinenfehler und/oder Arbeitsstellenfehler entstehen. Diese Fehler im Faserverband können am Beispiel einer Spinnmaschine unter anderem kurze und lange Dickstellen, Dünnstellen und Moire-Fehler sein. Ebenso sind unter Fehler auch das nicht Erreichen von Qualitätskriterien des Faserverbunds, unter anderem Haarigkeit und Gleichmäßigkeit zu verstehen.

Zusätzlich können die Arbeitsstellen und/oder deren Faserverbände auf entstehende Fehler durch das Vorhandensein eines Wickels am Ausgangszylinder und/oder Käfigaggregat, das Vorhandensein oder Fehlen eines Faserbandes, einer Flyerlunte und/oder Flyervorlage, der korrekte Fadenlauf, die Silhouette des Kopses oder der Kreuzspule, der Unterwindefäden und/oder das Vorhandensein von Fadenbrüchen überprüft werden. Zudem können arbeitsstellenspezifische Merkmale, wie der Bezug von Oberwalzen, übermäßiger Verschleiß, Oberriemchenbeschaffenheit, Ring- und Läuferverschleiß, verstopfte Fadenabsaugrohre und/oder Spindeldrehzahl, insbesondere zur Erkennung von Schleicherspindeln, erfasst werden. Denkbar ist zudem, den Fasereinlauf auf einen Saugschlitz zu kontrollieren sowie Streckwerkseinstellungen zu prüfen. Sollte es sich bei der Bildaufnahmeeinrichtung um eine Wärmebildkamera handeln, so können zusätzlich die Lager der Arbeitsstelle, insbesondere die Walzen- oder Spindellagerung, der Läufer, der Bezug von Oberwalzen, die Oberriemchenbeschaffenheit und/oder synthetische Fasern auf deren Temperatur und somit auf Beschädigungen und/oder Verschleiß kontrolliert, erfasst und/oder ausgewertet werden.

Auch ist es von Vorteil, wenn die erkannten Fehler je nach Ursprung und/oder Art, insbesondere in Textilmaschinenfehler, Arbeitsstellenfehler und/oder Fehler im Faserverband, kategorisiert werden. Als Ursprung eines Fehlers sind hier insbesondere die Textilmaschine und/oder einzelne Komponenten der Arbeitsstelle zu verstehen. Die Arten von Fehlern umfassen beispielsweise Fehler im Faserverband, unter anderem kurze und lange Dickstellen, Dünnstellen und Moire-Fehler. Auch kann als Art des Fehlers ein Hardwarefehler an der Textilmaschine und/oder Arbeitsstelle verstanden werden. Durch die Einteilung der Fehler in unterschiedliche Kategorien wird eine spätere Auswertung der Fehler erleichtert. Ebenso ist dadurch eine einfache Auswertung der vorherrschenden Fehler einer Textilmaschine möglich und kann so zur Qualitätsüberprüfung dienen.

Ebenso bringt es Vorteile mit sich, wenn die erkannten Fehler einer Arbeitsstelle zugeordnet werden. So kann stets rückgeschlossen werden, welche Arbeitsstelle welcher Textilmaschine einen Fehler verursacht und/oder einen fehlerhaften Faserverband produziert. Eine Erkennung der Arbeitsstelle ist unter anderem durch Bilderkennung, Zählung der passierten Arbeitsstellen und/oder GPS vorstellbar. So kann bei der Bilderkennung beispielsweise ein Barcode und/oder eine Arbeitsstellennummer miterfasst werden. Bei verfahrbaren Vorrichtungen, wie beispielsweise bei Serviceaggregaten und/oder Bläsern, ist zudem das Zählen der Arbeitsstellen eine kostengünstige Variante zur Lokalisierung. Hierbei können die passierten Arbeitsstellen gezählt und somit auf die aktuelle Position der portablen Vorrichtung an der Textilmaschine geschlossen werden. Da die Ortung mit Hilfe von GPS aktuell nur eine relativ ungenaue Ortung zulässt, ist hier insbesondere die Erkennung unterschiedlicher Textilmaschinen vorstellbar. In einem Fabrikgebäude mit einer Vielzahl an Textilmaschinen kann so mit Hilfe von GPS eine Erkennung der Textilmaschine und durch die Bilderkennung eine Unterscheidung der Arbeitsstellen gewährleistet werden. Ebenso kann die Zuweisung der Textilmaschine und der Arbeitsstelle lediglich mit einem der drei Verfahren erfolgen.

Vorteilhaft ist es zudem, wenn die erkannten Fehler, insbesondere mit Informationen des Ursprungs, der Art und/oder der zugeordneten Arbeitsstelle, in der Datenbank abgelegt werden. So können diese Daten zusätzlich in die Bewertung, Überwachung und/oder Abschätzung des Ist-Zustandes mit einbezogen werden. Eine Sicherung dieser Daten stellt zudem die Möglichkeit einer genauen Analysierung der Textilmaschinen und/oder Arbeitsstellen sicher.

Auch ist es äußert vorteilhaft, wenn beim Auftreten zumindest eines Fehlers dieser signalisiert und/oder angezeigt wird. Dadurch kann sichergestellt werden, dass ein Fehler sofort erkannt wird. Die Anzeige und/oder das Signal kann hierbei von der portablen Vorrichtung ausgehen, oder von einer anderen, an der Textilmaschine und/oder Arbeitsstelle, angebrachten Einrichtung.

Besonders vorteilhaft ist es, wenn die portable Vorrichtung einem Bediener visuelle und/oder akustische Anweisungen zur Lösung des Fehlers gibt und/oder dass die portable Vorrichtung und/oder der zentrale Rechner die Lösung zu einer Steuerung der portablen Vorrichtung, der Textilmaschine und/oder der Arbeitsstelle sendet. Durch die visuellen und/oder akustischen Anweisungen der portablen Vorrichtung an den Bediener kann eine direkte manuelle Fehlerbehebung erfolgen. Hierfür können die Anweisungen zur Fehlerbehebung direkt auf einem Bildschirm der portablen Vorrichtung angezeigt, und/oder über Lautsprecher akustisch ausgegeben werden. Die visuellen Anweisungen können hierbei insbesondere durch einfache schriftliche Anweisungen, Video-Anleitungen und/oder "augmented reality" erfolgen. Falls eine Fehlerbehebung automatisiert durch eine Textilmaschine und/oder Arbeitsstelle selbst realisierbar ist, kann die Lösung auch direkt an dessen Steuerung gesendet werden.

Ebenso bringt es Vorteile mit sich, wenn die Textilmaschine, die Arbeitsstelle und/oder der Faserverbund, insbesondere für eine bessere Erkennbarkeit möglicher Fehler, von einer Lichtquelle beleuchtet wird. So ist eine exakte Abbildung der Textilmaschine, der Arbeitsstelle und/oder des Faserverbunds auch bei erschwerten Lichtbedingungen möglich. Diese Lichtquelle kann unter anderem an der portablen Vorrichtung, der Arbeitsstelle und/oder der Textilmaschine angeordnet sein.

Ferner wird eine Überwachungseinrichtung vorgeschlagen, welche zur Durchführung des Verfahrens nach der vorherigen Beschreibung geeignet ist. Die Überwachungseinrichtung weist eine portable Vorrichtung und eine Auswerteeinrichtung auf, wobei in der portablen Vorrichtung wenigstens eine Bildaufnahmeeinrichtung angeordnet ist und die Bildaufnahmeeinrichtung und die Auswerteeinrichtung für einen Datenaustausch miteinander verbunden sind.

Vorteilhaft ist es, wenn die Bildaufnahmeeinrichtung eine Fotokamera, eine Videokamera, eine Hochgeschwindigkeitskamera, eine Wärmebildkamera und/oder ein Lidar ist. Fotokameras, Videokameras und/oder Hochgeschwindigkeitskameras stellen vornehmlich Bildaufnahmen im Lichtwellenbereich bereit, welche auch für das menschliche Auge sichtbar sind. Im Gegensatz dazu arbeiten Wärmebildkameras vornehmlich im Bereich der unsichtbaren Infrarotstrahlen. Dadurch können beispielsweise Temperaturbereiche bildlich dargestellt und insbesondere auf Fehler ausgewertet werden. Dies hat den Vorteil, dass somit Beschädigungen an den Arbeitsstellen und Faserverbänden einer Textilmaschine, welche aufgrund von Temperaturschwankungen und/oder unzulässigen Temperaturbereichen entstehen, erfasst werden können. Lidar ist eine dem Radar verwandte Methode zur optischen Abstands- und/oder Geschwindigkeitsmessung. Anstatt der Radiowellen wie beim Radar werden beim Lidar Laserstrahlen verwendet. Der Lidar sendet hierfür Laserimpulse und/oder Lichtimpulse im sichtbaren und/oder im unsichtbaren Wellenbereich aus und detektiert das von einer Oberfläche zurückgestreute Licht. Dadurch können beispielsweise Entfernungen, Geschwindigkeiten und/oder Beschleunigungen unterschiedlicher Bauteile der Textilmaschinen, der Arbeitsstelle und/oder des Faserverbands gemessen und/oder überprüft werden. Ein Vorteil von Lidar kann hierbei zusätzlich die geringere Empfindlichkeit der Bildaufnahme und/oder Lichtaufnahme gegenüber Flusenflug bei Textilmaschinen sein.

Vorteilhaft ist es zudem, wenn die Überwachungseinrichtung einen zentralen Rechner und/oder eine Steuerung aufweist, und die Auswerteeinrichtung in der portablen Vorrichtung, im zentralen Rechner und/oder in der Steuerung angeordnet ist. Die Auswerteeinrichtung ist hierbei für die Auswertung der Bildaufnahmen der Bildaufnahmeeinrichtung zuständig. So kann eine Auswertung, mit Hilfe der Auswerteeinrichtung auf der portablen Vorrichtung, dem zentralen Rechner und/oder der Steuerung erfolgen. Die Zuteilung kann hierbei basierend auf den notwendigen Leistungsbedarf der Auswertung der Bildaufnahme erfolgen.

Auch ist es äußert vorteilhaft, wenn die portable Vorrichtung, der zentrale Rechner und/oder die Steuerung für einen Datenaustausch durch eine Verbindungseinrichtung miteinander verbunden sind. Die Verbindungseinrichtung umfasst hierfür zumindest eine Sendeeinheit, zum Senden von Daten, eine Empfängereinheit, zum Empfangen von Daten und/oder eine Sende-Empfänger-Einheit, zum Senden und Empfangen von Daten. Darüber hinaus sind zumindest jeweils zwei Sendeeinheiten, Empfängereinheiten und/oder Sende-Empfänger-Einheiten mit Hilfe einer Kabelverbindung oder Funkverbindung miteinander verbunden.

Des Weiteren wird ein Computerprogramm vorgeschlagen, welches Programmanweisungen umfasst, die eine Überwachungseinrichtung zur Überwachung, Ausführung und/oder Steuerung des Verfahrens nach einem der vorherigen Ansprüche veranlasst, wenn das Computerprogramm auf der Überwachungseinrichtung läuft.

Weitere Vorteile der Erfindung sind in den nachfolgenden Ausführungsbeispielen beschrieben. Es zeigt:
- **Figur** 1: eine schematische Darstellung einer Arbeitsstelle einer Ringspinnmaschine und einen Bediener mit einer portablen Vorrichtung,
- Figur 2: eine schematische Darstellung einer Überwachungseinrichtung,
- **Figur 3**: eine schematische Darstellung einer Arbeitsstelle einer Rotorspinnmaschine und eine portable Vorrichtung gemäß einem alternativen Ausführungsbeispiel und
- **Figur 4**: eine schematische Darstellung einer Arbeitsstelle einer Luftspinnmaschine und eine portable Vorrichtung gemäß einem weiteren Ausführungsbeispiel.

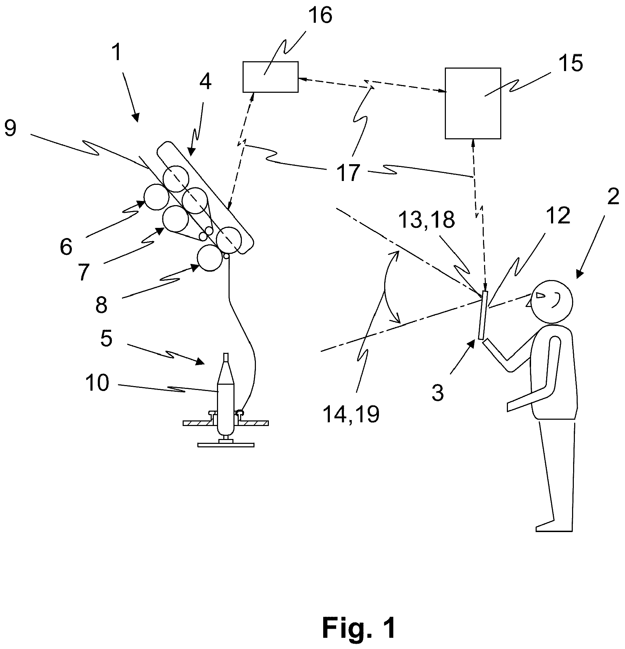

Figur 1 zeigt eine schematische Darstellung einer Arbeitsstelle 1 einer Textilmaschine, insbesondere einer Ringspinnmaschine, und einen davor positionierten Bediener 2 mit einer portablen Vorrichtung 3. Die Textilmaschine kann eine Vielzahl an Arbeitsstellen 1 umfassen, um eine Produktivität der Textilmaschine entsprechend der Anzahl der Arbeitsstellen 1 zu erhöhen. Die Arbeitsstelle 1 ist im vorliegenden Ausführungsbeispiel als eine Spinnstelle einer Ringspinnmaschine ausgebildet. Die Erfindung ist aber prinzipiell auf jede beliebige Textilmaschine anwendbar, insbesondere auf Spulmaschinen, Flyer, Karden, Kämmmaschinen oder andere Spinnmaschinen, wie beispielsweise Rotorspinnmaschinen oder Luftspinnmaschinen.

Gezeigt sind beispielhaft einzelne Bauteile der Arbeitsstelle 1 der Spinnmaschine, nämlich ein Streckwerk 4 und eine Spinnvorrichtung 5. Das Streckwerk 4 besteht aus drei Walzenpaaren, einem Eingangswalzenpaar 6, einem Riemchenwalzenpaar 7 und einem Ausgangswalzenpaar 8. Ein in das Streckwerk 4 einlaufender Faserverband 9 wird zwischen den Walzen der Walzenpaare 6, 7 und 8 geklemmt und bedingt durch die unterschiedlichen Drehzahlen der Walzenpaare 6, 7 und 8 verstreckt. Nach dem Verlassen des Streckwerks 4 wird der Faserverband 9 verdichtet. Anschließend gelangt der Faserverband 9 zur Spinnvorrichtung 5 und wird dort einer drehenden Spule 10 zugeführt. Durch die Drehung der Spule 10 wird dem Faserverband 9 eine Drehung erteilt und dadurch ein Garn gebildet.

Der vor der Textilmaschine positionierte Bediener 2 hat die portable Vorrichtung 3 so auf die Arbeitsstelle 1 gerichtet, dass der Bediener 2 auf eine Anzeigeeinrichtung 12 blicken und gleichzeitig eine Bildaufnahmeeinrichtung 13 die Arbeitsstelle 1 erfassen kann. Die Anzeigeeinrichtung 12 und die Bildaufnahmeeinrichtung 13 sind hierbei in der portablen Vorrichtung 3 angeordnet. Mit Hilfe der Bildaufnahmeeinrichtung 13 kann ein Ist-Zustand der Arbeitsstelle 1 anhand von Bildaufnahmen erfasst und mit einem Soll-Zustand verglichen werden. Die Bildaufnahmeeinrichtung 13 besitzt einen begrenzten Aufnahmewinkel 14, der bestimmt, welcher Bereich der Arbeitsstelle 1 in der Bildaufnahme aufgenommen wird. Da die portable Vorrichtung 3 durch den Bediener 2 in alle Raumrichtungen beweglich ist, ist die Bildaufnahme der kompletten Arbeitsstelle 1 oder auch der gesamten Textilmaschine möglich. So kann auch die portable Vorrichtung 3 dazu verwendet werden, mehrere Textilmaschinen und/oder Arbeitsstellen 1 nacheinander oder gleichzeitig zu erfassen.

Die portable Vorrichtung 3 ist im gezeigten Anwendungsbeispiel mit einem zentralen Rechner 15 verbunden, wobei dieser wiederrum mit einer Steuerung 16 der Textilmaschine verbunden ist. Für einen Datenaustausch sind die portable Vorrichtung 3, der zentrale Rechner 15 und die Steuerung 16 durch Verbindungseinrichtungen, welche hier schematisch durch Pfeile 17 dargestellt sind, miteinander verbunden. So kann die erfasste Bildaufnahme durch die Bildaufnahmeeinrichtung 13 bzw. der Ist-Zustand über die portable Vorrichtung 3 an den zentralen Rechner 15 gesendet werden. Dieser wertet die Bildaufnahme aus und sendet mögliche Fehler und/oder deren Lösung an die portable Vorrichtung 3 und/oder an die Steuerung 16. Ebenso ist es vorstellbar, dass die Auswertung der Bildaufnahme auf der portablen Vorrichtung 3 läuft und diese die möglichen Fehler und/oder deren Lösung an den zentralen Rechner 15 und/oder direkt an die Steuerung 16 sendet. Bei einer solchen Auswertung wäre es zudem denkbar, dass auf einen zentralen Rechner 15 verzichtet wird bzw. die portablen Vorrichtung 3 den zentralen Rechner 15 aufweist. Bei einfachen, automatisiert behebbaren Fehlern, kann der Fehler direkt durch die Steuerung 16 behoben werden. Hierfür steht die Steuerung 16 direkt mit der Arbeitsstelle 1 und/oder mit der Textilmaschine in Verbindung. Bei einer notwendigen manuellen Fehlerbehebung wird der Fehler und/oder die Lösung zur Fehlerbehebung an der portablen Vorrichtung 3 angezeigt und der Bediener 2 kann den Fehler direkt an der Arbeitsstelle 1 beheben.

Die portable Vorrichtung 3 umfasst weiterhin eine Lichtquelle 18. Diese Lichtquelle 18 befindet sich nahe der Bildaufnahmeeinrichtung 13 und besitzt einen Abstrahlwinkel 19, welcher im gezeigten Anwendungsbeispiel dem Aufnahmewinkel 14 entspricht. Ebenso ist es vorstellbar, dass die eine, oder eine zusätzliche Lichtquelle 18 an der Arbeitsstelle 1 angebracht ist.

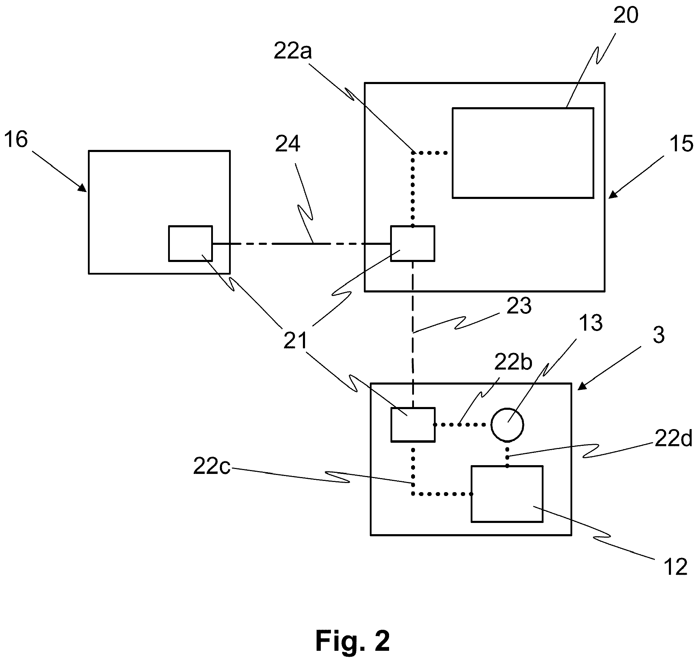

Figur 2 zeigt eine schematische Darstellung einer Überwachungseinrichtung. Diese umfasst im vorliegenden Anwendungsbeispiel neben der portablen Vorrichtung 3 sowohl den zentralen Rechner 15, als auch die Steuerung 16 der Textilmaschine. Im zentralen Rechner 15 ist eine Auswerteeinrichtung 20 angeordnet, welche mit einer Sende-Empfänger-Einheit 21 über eine elektrische Leitung 22a verbunden ist. Eine Funkverbindung 23 gewährleistet hierbei die Verbindung zwischen den beiden Sende-Empfänger-Einheiten 21 der portablen Vorrichtung 3 und des zentralen Rechners 15. Über eine Kabelverbindung 24 sind die beiden Sende-Empfänger-Einheiten 21 des zentralen Rechners 15 und der Steuerung 16 miteinander verbunden. Hierbei ist es ebenso vorstellbar, dass es sich bei der Funkverbindung 23 um eine Kabelverbindung, und bei der Kabelverbindung 24 um eine Funkverbindung handelt.

Die portable Vorrichtung 3 umfasst neben der Sende-Empfänger-Einheit 21 zusätzlich die Bildaufnahmeeinrichtung 13 und die Anzeigeeinrichtung 12. Die Bildaufnahmeeinrichtung 13 ist hierfür über die elektrische Leitung 22b und die Anzeigeeinrichtung 12 über die elektrische Leitung 22c mit der Sende-Empfängereinheit 21 verbunden. Über die beiden Sende-Empfänger-Einheiten 21 ist somit die Bildaufnahmeeinrichtung 13 mit der Auswerteeinrichtung 20 verbunden. So können Bildaufnahmen zur Auswerteeinrichtung 20 gesendet, und dort insbesondere auf Fehler hin ausgewertet werden. Ebenso ist es vorstellbar, dass die portablen Vorrichtung 20 eine weitere Auswerteeinrichtung 20 aufweist, welche ebenfalls Bildaufnahmen auf Fehler hin auswertet. Die Speicherung der Bildaufnahmen erfolgt hierbei ebenfalls auf dem zentralen Rechner 15, der die Datenbank umfasst. Die ausgewerteten Ergebnisse, insbesondere die Fehler werden von der Auswerteeinrichtung 20 über die Funkverbindung 23 zurück an die portable Vorrichtung 3 gesendet, wobei sie anschließend auf der Anzeigeeinrichtung 12 angezeigt werden können. Durch eine weitere elektrische Leitung 22d ist eine direkte Verbindung zwischen der Bildaufnahmeeinrichtung 13 und der Anzeigezeigeeinrichtung 12 gegeben. So kann die Lösung bestimmter Fehler mit Hilfe von "augmented reality" erfolgen. Das bedeutet, dass die durch die Bildaufnahmeeinrichtung 13 aufgenommene Realität mit Hilfe von virtuellen Elementen erweitert wird. So kann beispielsweise eine virtuelle Darstellung der Lösung auf der Anzeigeeinrichtung 12 erfolgen, welche vom Bediener (Figur 1) ausgeführt wird.

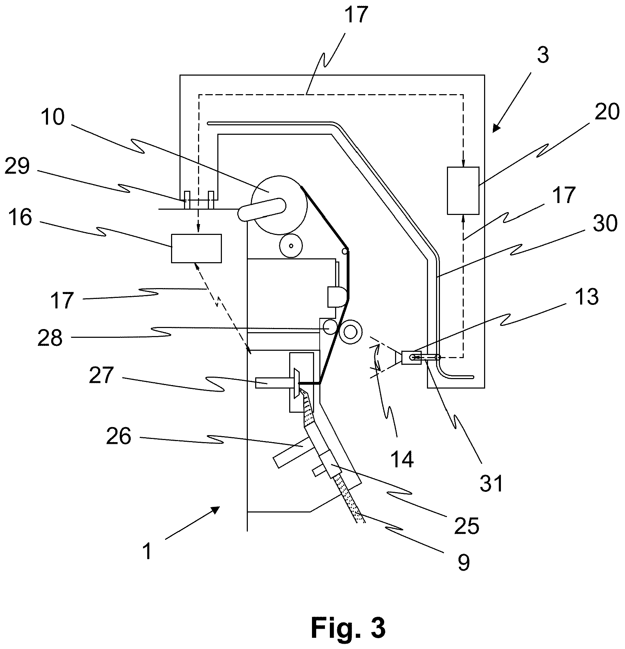

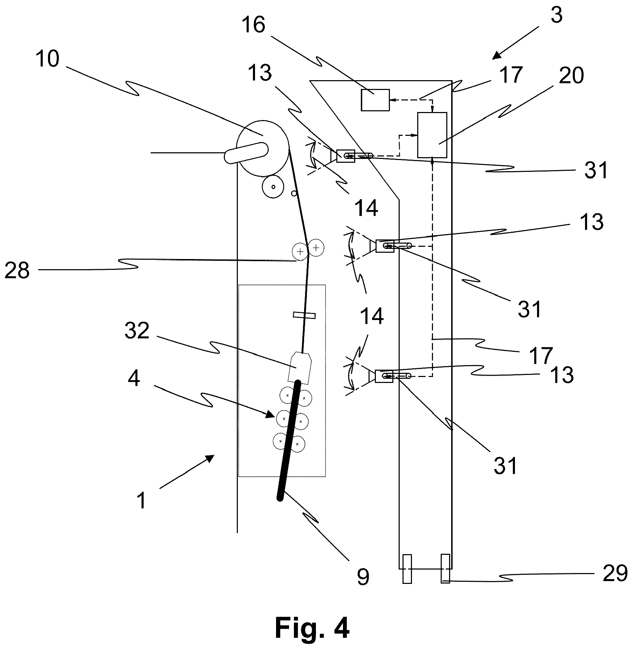

Bei der nachfolgenden Beschreibung der in den Figuren 3 und 4 dargestellten alternativen Ausführungsbeispiele werden für Merkmale, die im Vergleich zu den in den Figuren 1 und 2 dargestellten Ausführungsbeispiele in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

In Figur 3 ist eine schematische Darstellung einer Arbeitsstelle 1 einer Textilmaschine, insbesondere einer Rotorspinnmaschine, und eine portable Vorrichtung 3 gemäß einem alternativen Ausführungsbeispiel gezeigt. Auch hier kann die Textilmaschine eine Vielzahl an Arbeitsstellen 1 umfassen, um die Produktivität der Textilmaschine zu erhöhen. Die Arbeitsstelle 1 ist im vorliegendem Ausführungsbeispiel als eine Arbeitsstelle 1 einer Rotorspinnmaschine ausgebildet. Die Erfindung ist aber prinzipiell auf jede beliebige Textilmaschine anwendbar, insbesondere auf Spulmaschinen, Flyer, Karden, Kämmmaschinen oder andere Spinnmaschinen, wie beispielsweise Ringspinnmaschinen oder Luftspinnmaschinen.

Gezeigt sind beispielhaft einzelne Bestandteile der Arbeitsstelle 1 der Rotorspinnmaschine, nämlich unter anderem eine Speiseeinrichtung 25, eine Auflösewalze 26, ein Spinnrotor 27, eine Fadenabzugseinheit 28 und die Spule 10. Der Faserverband 9 wird mittels der Speiseeinrichtung 25 der Auflösewalze 26 zugeführt. Die Auflösewalze 26 löst den Faserverband 9 in Einzelfasern auf. Diese Einzelfasern werden mithilfe des Spinnrotors 27 zu einem Garn gesponnen. Dieses Garn wird mithilfe der Fadenabzugseinheit 28 abgezogen und auf die Spule 10 aufgewickelt.
Die portable Vorrichtung 3 ist im gezeigten Ausführungsbeispiel eine verfahrbares System. Dieses verfahrbare System kann beispielsweise ein Serviceroboter, ein Serviceaggregat und/oder ein Bläser sein, welcher an der Textilmaschine entlang der Arbeitsstellen 1 über eine Bewegungseinrichtung 29 verfahrbar gestaltet ist. Für die bessere Übersichtlichkeit sind die üblicherweise bei solchen Systemen vorhandenen Bauteile, welche für die Wartung, für den Service, das Abblasen, das Spulenwechseln und/oder zum Wiederanspinnen der Textilmaschine benötigt werden, nicht dargestellt.

Die portable Vorrichtung 3 weist die Bildaufnahmeeinrichtung 13 auf, welche mit ihrem begrenzten Aufnahmewinkel 14 auf die Arbeitsstelle 1 gerichtet ist. Um Bildaufnahmen der einzelnen Bestandteile der Arbeitsstelle 1 und des Faserverbands 9 an unterschiedlichen Positionen der Arbeitsstelle 1 aufzunehmen, weist die portable Vorrichtung 3 ein Schienensystem 30 auf, entlang dessen die Bildaufnahmeeinrichtung 13 positioniert werden kann. Zusätzlich dazu ist die Bildaufnahmeeinrichtung 13 im Schienensystem 30 über ein Schwenkgelenk 31 gelagert, welches zusätzlich das Verschwenken der Bildaufnahmeeinrichtung 13 in horizontaler und/oder vertikaler Richtung erlaubt. Die Positionierung der Bildaufnahmeeinrichtung 13 kann sowohl manuell, als auch automatisch erfolgen. Somit kann die Bildaufnahmeeinrichtung 13 durch die Bewegungseinrichtung 29 entlang mehrerer Arbeitsstellen 1 und mittels des Schienensystems 30 und des Schwenkgelenks 31 an der einen Arbeitsstelle 1 horizontal und/oder vertikal in unterschiedliche Richtungen bewegt werden und so der Aufnahmewinkel 14 erweitert werden.

Im Gegensatz zum Ausführungsbeispiel in der Figur 1 weist im gezeigten Ausführungsbeispiel der Figur 3 die portable Vorrichtung 3 selbst die Auswerteeinrichtung 20 auf und es wird somit der zentrale Rechner 15, welcher in Figur 1 dargestellt ist, nicht benötigt. Für den Datenaustausch sind die Bildaufnahmeeinrichtung 13, die Auswerteeinrichtung 20 und die Steuerung 16 durch Verbindungseinrichtungen, welche hier schematisch durch Pfeile 17 dargestellt sind, miteinander verbunden. Diese Verbindungseinrichtungen können über Funk arbeiten und/oder über Kabel verbunden sein. So können die durch die Bildaufnahmeeinrichtung 13 erfassten Bildaufnahmen von der Auswerteeinrichtung 20 ausgewertet werden. Zusätzlich oder alternativ kann die Auswertung von einem zentralen Rechner 15 (siehe Figur 1) übernommen werden. Mögliche Fehler können direkt an die Steuerung 16 der Arbeitsstelle 1 weitergegeben werden. Da es sich bei der portablen Vorrichtung 3 im gezeigten Ausführungsbeispiel um ein Serviceaggregat handeln kann, können einige der auftretenden Fehler direkt durch die portable Vorrichtung 3 behoben werden.

Figur 4 zeigt eine schematische Darstellung einer Arbeitsstelle 1 einer Textilmaschine, insbesondere einer Luftspinnmaschine, und eine portable Vorrichtung 3 gemäß einem weiteren Ausführungsbeispiel. Auch hier kann die Textilmaschine eine Vielzahl an Arbeitsstellen 1 umfassen, um die Produktivität der Textilmaschine zu erhöhen. Die Arbeitsstelle 1 ist im vorliegendem Ausführungsbeispiel als eine Arbeitsstelle 1 einer Luftspinnmaschine ausgebildet. Die Erfindung ist aber prinzipiell auf jede beliebige Textilmaschine anwendbar, insbesondere auf Spulmaschinen, Flyer, Karden, Kämmmaschinen oder andere Spinnmaschinen, wie beispielsweise Ringspinnmaschinen oder Rotorspinnmaschinen.

Gezeigt sind beispielhaft einzelne Bestandteile der Arbeitsstelle 1 der Luftspinnmaschine, nämlich unter anderem das Streckwerk 4, eine Luftspinndüse 32, die Fadenabzugseinheit 28 und die Spule 10. Der Faserverband 9 wird mittels des Streckwerks 4 verstreckt und der Luftspinndüse 32 zugeführt. Der verstreckte Faserverband 9 wird mithilfe der Luftspinndüse 32 zu einem Garn gesponnen. Dieses Garn wird mithilfe der Fadenabzugseinheit 28 abgezogen und auf die Spule 10 aufgewickelt.

Ähnlich zum Ausführungsbeispiel der Figur 3 ist auch hier die portable Vorrichtung 3 ein verfahrbares System, welches jedoch mittels der Bewegungseinrichtung 29 frei beweglich gestaltet ist und nicht an die Textilmaschine gebunden ist. So ist es vorstellbar, dass die portable Vorrichtung 3 sich entlang mehrerer Textilmaschinen und/oder mehrerer Arbeitsstellen 1 bewegen kann. Ebenso ist es ähnlich zum Ausführungsbeispiel der Figur 3 vorstellbar, dass es sich bei der portablen Vorrichtung 3 um einen Serviceroboter, ein Serviceaggregat und/oder einen Bläser handelt.

Die portable Vorrichtung 3 weist mehrere Bildaufnahmeeinrichtungen 13 auf, welche jeweils über Schwenkgelenke 31 angebunden sind, um die Bildaufnahmeeinrichtungen 13 in horizontaler und/oder vertikaler Richtung zu verschwenken. Jede der Bildaufnahmeeinrichtungen 13 kann hierbei einen anderen Teil der Arbeitsstelle 1 mittels Bildaufnahmen auf Fehler überprüfen. Ebenso ist es vorstellbar, dass es sich bei den Bildaufnahmeeinrichtungen 13 um unterschiedliche Arten von Bildaufnahmeeinrichtungen 13 handelt, wie beispielsweise eine Fotokamera, eine Videokamera, eine Hochgeschwindigkeitskamera, eine Wärmebildkamera und/oder ein Lidar. So können mittels der Bildaufnahmeeinrichtungen 13 unterschiedliche Arten von Fehlern ermittelt werden. Auch ist es möglich, dass wenigstens eine der drei und/oder eine zusätzliche Bildaufnahmeeinrichtung/en 13 in einem oder mehreren Schienensystemen 30, wie in Figur 3 dargestellt, geführt sind.

Im Gegensatz zu den Ausführungsbeispielen der Figuren 1 bis 3 ist die Steuerung 16 an der portablen Vorrichtung 3 angeordnet. So können die durch die Bildaufnahmeeinrichtungen 13 erkannten Fehler über die Auswerteeinrichtung 20 an die Steuerung 16 weitergegeben und direkt von der portablen Vorrichtung 3 behoben werden. Ebenso ist es vorstellbar, dass die Steuerung 16 unabhängig (siehe Figuren 1 und 2) und/oder an der Arbeitsstelle 1 (siehe Figur 3) angeordnet ist.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Arbeitsstelle
- 2: Bediener
- 3: portable Vorrichtung
- 4: Streckwerk
- 5: Spinnvorrichtung
- 6: Eingangswalzenpaar
- 7: Riemchenwalzenpaar
- 8: Ausgangswalzenpaar
- 9: Faserverband
- 10: Spule
- 12: Anzeigeeinrichtung
- 13: Bildaufnahmeeinrichtung
- 14: Aufnahmewinkel
- 15: zentraler Rechner
- 16: Steuerung
- 17: Pfeile
- 18: Lichtquelle
- 19: Abstrahlwinkel
- 20: Auswerteeinrichtung
- 21: Sende-Empfänger-Einheit
- 22: Elektrische Leitungen
- 23: Funkverbindung
- 24: Kabelverbindung
- 25: Liefereinrichtung
- 26: Auflösewalze
- 27: Spinnrotor
- 28: Fadenabzugseinheit
- 29: Bewegungseinrichtung
- 30: Schienensystem
- 31: Schwenkgelenk
- 32: Luftspinndüse

## Patentansprüche

1. Verfahren zur optischen Überwachung einer Textilmaschine, insbesondere einer Spinnmaschine, Spulmaschine, Flyer, Karde oder Kämmmaschine,
mit zumindest einer Arbeitsstelle (1), welche einen Faserverband (9), insbesondere ein Garn, ein Faserband, eine Lunte oder ein Vlies, verarbeitet,
wobei ein Ist-Zustand der Arbeitsstelle (1) und des Faserverbands (9) optisch durch eine Bildaufnahme erfasst wird,
**dadurch gekennzeichnet,**
**dass** die Bildaufnahme mit wenigstens einer portablen Vorrichtung (3) erfolgt, und die Bildaufnahme in Bezug auf einen Unterschied zwischen einem Soll-Zustand der Arbeitsstelle (1) und des Faserverbands (9) und dem jeweiligen Ist-Zustand überwacht wird.

2. Verfahren nach dem vorherigen Anspruch, **dadurch gekennzeichnet,**
**dass** die portable Vorrichtung (3) ein Smartphone, ein Tablet, ein tragbarer Computer, eine Datenbrille, eine portable Kamera oder ein verfahrbares System ist.

3. Verfahren nach einem oder mehreren der vorherigen Ansprüche,
**dadurch gekennzeichnet,**
**dass** die portable Vorrichtung (3) nacheinander und/oder gleichzeitig mehrere Textilmaschinen und/oder mehrere Arbeitsstellen (1) und Faserverbände (9) erfasst.

4. Verfahren nach einem oder mehreren der vorherigen Ansprüche,
**dadurch gekennzeichnet,**
**dass** die portable Vorrichtung (3) entlang der mehreren Textilmaschinen und/oder der mehreren Arbeitsstellen (1) und Faserverbände (9) transportierbar und/oder verfahrbar gestaltet ist.

5. Verfahren nach einem oder mehreren der vorherigen Ansprüche,
**dadurch gekennzeichnet,**
- **dass** der Ist-Zustand anhand der Bildaufnahme von der portablen Vorrichtung (3) ausgewertet wird und/oder
- **dass** die Bildaufnahme von der portablen Vorrichtung (3) an einen zentralen Rechner (15) gesendet und dort der Ist-Zustand ausgewertet wird.

6. Verfahren nach einem oder mehreren der vorherigen Ansprüche,
**dadurch gekennzeichnet,**
**dass** die Bildaufnahme und/oder der Ist-Zustand in einer Datenbank abgelegt wird.

7. Verfahren nach einem oder mehreren der vorherigen Ansprüche,
**dadurch gekennzeichnet,**
**dass** anhand des Vergleichs zwischen Ist-Zustand und Soll-Zustand eine Erkennung von Fehlern der Arbeitsstelle (1) und/oder des Faserverbands (9) erfolgt.

8. Verfahren nach einem oder mehreren der vorherigen Ansprüche,
**dadurch gekennzeichnet,**
**dass** die erkannten Fehler je nach Ursprung und/oder Art, insbesondere in Textilmaschinenfehler, Arbeitsstellenfehler und/oder Fehler im Faserverband (9), kategorisiert werden.

9. Verfahren nach einem oder mehreren der vorherigen Ansprüche,
**dadurch gekennzeichnet,**
**dass** die erkannten Fehler einer Arbeitsstelle (1) zugeordnet werden.

10. Verfahren nach einem oder mehreren der vorherigen Ansprüche,
**dadurch gekennzeichnet,**
**dass** die erkannten Fehler, insbesondere mit Informationen des Ursprungs, der Art und/oder der zugeordneten Arbeitsstelle (1), in der Datenbank abgelegt werden.

11. Verfahren nach einem oder mehreren der vorherigen Ansprüche,
**dadurch gekennzeichnet,**
**dass** beim Auftreten zumindest eines Fehlers dieser signalisiert und/oder angezeigt wird.

12. Verfahren nach einem oder mehreren der vorherigen Ansprüche,
**dadurch gekennzeichnet,**
- **dass** die portable Vorrichtung (3) einem Bediener (2) visuelle und/oder akustische Anweisungen zur Lösung des Fehlers gibt und/oder
- **dass** die portable Vorrichtung (3) und/oder der zentrale Rechner (15) die Lösung zu einer Steuerung (16) der portablen Vorrichtung (3), der Textilmaschine und/oder der Arbeitsstelle (1) sendet.

13. Verfahren nach einem oder mehreren der vorherigen Ansprüche,
**dadurch gekennzeichnet,**
**dass** die Textilmaschine, die Arbeitsstelle (1) und/oder der Faserverband (9), insbesondere für eine bessere Erkennbarkeit möglicher Fehler, von einer Lichtquelle (18) beleuchtet wird.

14. Überwachungseinrichtung zur Durchführung des Verfahrens nach einem der vorherigen Ansprüche, **dadurch gekennzeichnet, dass** die Überwachungseinrichtung eine portable Vorrichtung (3) und eine Auswerteeinrichtung (20) aufweist,
wobei in der portablen Vorrichtung (3) wenigstens eine Bildaufnahmeeinrichtung (13) angeordnet ist und die Bildaufnahmeeinrichtung (13) und die Auswerteeinrichtung (20) für einen Datenaustausch miteinander verbunden sind.

15. Überwachungseinrichtung nach dem vorherigen Anspruch, **dadurch gekennzeichnet,**
**dass** die Bildaufnahmeeinrichtung (13) eine Fotokamera, eine Videokamera, eine Hochgeschwindigkeitskamera, eine Wärmebildkamera und/oder ein Lidar ist.

16. Überwachungseinrichtung nach einem oder mehreren der vorherigen Ansprüche, **dadurch gekennzeichnet,**
**dass** die Überwachungseinrichtung einen zentralen Rechner (15) und/oder eine Steuerung (16) aufweist,
und die Auswerteeinrichtung (20) in der portablen Vorrichtung (3), im zentralen Rechner (15) und/oder in der Steuerung (16) angeordnet ist.

17. Überwachungseinrichtung nach einem oder mehreren der vorherigen Ansprüche, **dadurch gekennzeichnet,**
**dass** die portable Vorrichtung (3), der zentrale Rechner (15) und/oder die Steuerung (16) für einen Datenaustausch durch eine Verbindungseinrichtung miteinander verbunden sind.

18. Computerprogramm, **dadurch gekennzeichnet,**
**dass** das Computerprogramm Programmanweisungen umfasst, die eine Überwachungseinrichtung zur Überwachung, Ausführung und/oder Steuerung des Verfahrens nach einem der vorherigen Ansprüche veranlasst, wenn das Computerprogramm auf der Überwachungseinrichtung läuft.
